(19) Europäisches Patentamt / European Patent Office / Office européen des brevets

(11) **EP 1 904 544 B1**

(12) **EUROPÄISCHE PATENTSCHRIFT**

(45) Veröffentlichungstag und Bekanntmachung des Hinweises auf die Patenterteilung:
**15.04.2009 Patentblatt 2009/16**

(21) Anmeldenummer: **06764116.7**

(22) Anmeldetag: **10.07.2006**

(51) Int Cl.:
**C08F 285/00** *(2006.01)*    **C08F 2/22** *(2006.01)*
**C08F 265/04** *(2006.01)*

(86) Internationale Anmeldenummer:
**PCT/EP2006/064041**

(87) Internationale Veröffentlichungsnummer:
**WO 2007/006766 (18.01.2007 Gazette 2007/03)**

(54) **VERFAHREN ZUR HERSTELLUNG VON EMULSIONSPOLYMERISATEN**

METHOD FOR PRODUCING EMULSION POLYMERS

PROCEDE DE FABRICATION DE POLYMERISATS D'EMULSION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.07.2005 DE 102005033516**

(43) Veröffentlichungstag der Anmeldung:
**02.04.2008 Patentblatt 2008/14**

(73) Patentinhaber: **BASF SE**
**67056 Ludwigshafen (DE)**

(72) Erfinder:
- **ROSCHMANN, Konrad**
  **67069 Ludwigshafen-Edigheim (DE)**
- **TUCHBREITER, Arno**
  **67346 Speyer (DE)**
- **JAHNS, Ekkehard**
  **69469 Weinheim (DE)**
- **LEUNINGER, Jörg**
  **55129 Mainz (DE)**
- **SCHULER, Bernhard**
  **68199 Mannheim (DE)**
- **WAGNER, Oliver**
  **67574 Osthofen (DE)**
- **REINSCH, Michaela**
  **67434 Neustadt (DE)**
- **WRAZIDLO, Robert**
  **67158 Ellerstadt (DE)**

(56) Entgegenhaltungen:
EP-A1- 0 696 602        EP-A2- 1 197 503
WO-A-00/68304          US-A- 5 618 888

Bemerkungen:
Die Akte enthält technische Angaben, die nach dem Eingang der Anmeldung eingereicht wurden und die nicht in dieser Patentschrift enthalten sind.

## Beschreibung

Die vorliegende Erfindung betrifft ein Verfahren zur Herstellung von Emulsionspolymerteilchen mit einer Kern-Schale-Struktur sowie deren Verwendung in Anstrichmitteln, Papierbeschichtungen, Schäumen und kosmetischen Mitteln.

Organische Hohlteilchen sind eine besondere Art von Kern-Schale-Partikeln, die in getrockneter Form aus einem luftgefüllten Hohlraum, umgeben von einer harten Hülle bestehen. Aufgrund dieses Aufbaus haben sie die besondere Eigenschaft, Licht zu streuen, wodurch ihr Einsatz als Weißpigment in Anstrichmitteln, Papierbeschichtungen und in kosmetischen Mitteln, beispielsweise Sonnencremes begründet liegt. Dort ersetzen sie teilweise das anorganische Weißpigment Titandioxid und verstärken zusätzlich die Wirkung des verbliebenen $TiO_2$.

C. J. McDonald und M. J. Devon beschreiben in Advances in Colloid and Interface Science 2002, 99, 181-213 eine Reihe von Möglichkeiten zur Herstellung dieser Hohlteilchen wie unter anderem die Quellung mit organischen Lösungsmitteln oder Treibmitteln, Verkapselung von Kohlenwasserstoffen oder Ansätze aufbauend auf W/O/W-Emulsionen. Die aus ökologischen wie auch aus ökonomischen Gründen bevorzugte Methode ist allerdings die osmotische Quellung spezieller Kem-Schale-Teilchen.

EP 226 33 beschreibt diesen Prozess grundlegend. In einem ersten Schritt wird ein hydrophiler Kern bestehend aus 15-70% einer polymerisierbaren Säure wie Acryl- oder Methacrylsäure hergestellt, welcher anschließend mit einer harten, hydrophoben Schale bestehend aus >90% nicht-ionischen Monomeren wie Styrol umhüllt wird. Nach Fertigstellung des Kern-Schale-Partikels wird dieser bei einer Temperatur um oder über der Glasübergangstemperatur der Hülle mit Ammoniak oder einer anderen flüchtigen Base gequollen.

EP 915 108, EP 959176, EP 404 184, US 5,360,827 sowie WO 00/68304 beschreiben eine Verfeinerung des obigen Prozesses. Zur Erleichterung der Quellung wird die Hülle durch die Zugabe von Monomeren bzw. organische Lösemittel weich gemacht, nach erfolgter Quellung kann dieser Weichmacher einfach durch Zugabe von Radikalstarter durch Abreaktion aus dem System entfernt werden beziehungsweise verbleibt in diesem. Die Verwendung von Monomeren als Weichmacher ist allerdings an bestimmte Bedingungen geknüpft. Aufgrund der ihnen innewohnenden Reaktivität muss eine vorzeitige Reaktion unbedingt unterbunden werden, d.h. es darf keine nennenswerte Reaktion des Monomers stattfinden. Als Maßnahmen hierzu wird das Abwarten auf das vollständige Abreagieren des Radikalstarters, eine Absenkung der Quelltemperatur sowie die Zugabe eines Polymerisations-Inhibitors oder eines Reduktionsmittels gelehrt.

Diese Vorgehensweise ist jedoch mit einigen Nachteilen verbunden. Nicht nur, dass durch die Wartezeit verlängerte Zykluszeiten in Kauf genommen werden müssen, aufgrund der im Vergleich zum konventionellen Prozess nötigen niedrigeren Quelltemperatur kann der weichmachende und damit $T_g$-absenkende Effekt des Monomeren nicht voll ausgenutzt werden. Die gravierendsten Nebenwirkungen hat jedoch der Einsatz von Polymerisations-Inhibitoren, da diese naturgegeben der abschließenden Abreicherung des Monomeren entgegenwirken. Dies führt unter Umständen dazu, dass die höchsten Monomer-Konzentrationen nicht zum gewünschten Zeitpunkt der Quellung, sondern erst später beim Aufbringen einer weiteren, der mechanischen Stabilisierung dienenden Hülle erreicht werden, was diese empfindlich schwächt und im ungünstigsten Falle durch plastisches Zerfließen zu deren totalen Zerstörung führen kann.

Aufgabe der vorliegenden Erfindung war daher die Entwicklung eines Herstellverfahrens für Emulsionspolymerteilchen, insbesondere für organische Hohlteilchen, dass die Nachteile der Verfahren des Standes der Technik vermeidet und das zum Zeitpunkt der Quellung hohe Monomer-Konzentrationen aufweist.

Erfindungsgemäß gelöst wurde die Aufgabe durch ein Verfahren zur Herstellung von Emulsionspolymerteilchen durch Herstellung eines Mehrstufen Emulsionspolymers durch sequentielle Polymerisation,

  i) einer Saat und

  ii) einer Quellsaat enthaltend 0 bis 100 Gew.-% mindestens eines nicht-ionisch ethylenisch ungesättigten Monomers und 0 bis 40 Gew.-% mindestens eines monoethylneisch ungesättigten hydrophilen Monomers, jeweils bezogen auf das Gesamtgewicht des Kernstufenpolymers, das sowohl Saat als auch Quellsaat umfasst, anschließender Polymerisation

  iii) einer ersten Schale enthaltend 85 bis 99,9 Gew.% mindesten eines nicht-ionisch ethylenisch ungesättigten Monomers und 0,1 bis 15 Gew.-% mindestens eines hydrophilen monoethylenisch ungesättigten Monomers, anschließender Polymerisation

  iv) einer zweiten Schale enthaltend 85 bis 99,9 Gew.-% mindestens eines nicht-ionisch ethylenisch ungesättigten Monomers und 0,1 bis 15 Gew.-% mindestens eines hydrophilen monethylenisch ungesättigten Monomers, anschließender Zugabe

  v) mindestens eines Weichmachermonomers mit einer Ceiling Temperatur kleiner 181 °C bevorzugt kleiner 95°C

  vi) Neutralisation bis zu einem pH-Wert von mindestens 7,5 oder größer bevorzugt größer 8, der so gebildeten Partikel mit einer Base, anschließender Polymerisation

  vii) einer dritten Schale enthaltend 90 bis 99,9 Gew.% mindestens eines nicht-ionisch ethylenisch ungesättigten Monomers und 0,1 bis 10 Gew.-% mindestens eines hydrophilen monoethylenisch ungesättigten Monomers viii) sowie gegebenenfalls Polymerisation weiterer Schalen enthaltend mindestens ein nicht-ionisch ethylenisch ungesättigtes Monomer und mindestens ein hydrophiles monoethylenisch ungesättigtes Monomer.

Ein weiterer Gegenstand der Erfindung ist die Verwendung der erfindungsgemäß hergestellten Emulsionpolymerisate in Anstrichmitteln, Papierbeschichtungen, Schäumen oder kosmetischen Mitteln.

Ein Vorteil der Erfindung liegt darin, dass in der Stufe (iv) bei Verwendung von Monomeren, deren Ceiling-Temperatur (Frieder Vieweg & Sohn Verlagsgesellschaft mbH, Braunschweig/Wiesbaden, 1997) unterhalb der Quelltemperatur liegt oder - als Extremfall davon - welche aus thermodynamischen Gründen kein Homopolymer bilden können, die Nachteile des Standes der Technik umgangen werden können und eine Quellung ohne Zugabe von Polymerisations-Inhibitoren oder Reduktionsmitteln selbst in Gegenwart von Restmengen an Initiator möglich ist.

Bei der beschriebenen Erfindung handelt es sich um mehrstufige sequentielle Emulsionspolymerisation. Sequentiell bezieht sich auf die Durchführung der einzelnen Stufen, wobei auch jede einzelne Stufe aus mehreren sequentiellen Schritten aufgebaut sein kann.

Der Begriff "Saat" bezieht sich auf eine wässrige Polymerdispersion, die zu Beginn der Mehrstufenpolymerisation eingesetzt wird und das Produkt aus einer Emulsionspolymerisation ist, oder kann sich auf eine wässrige Polymerdispersion, die am Ende einer der Polymerisationsstufen zur Herstellung der Hohlteilchendispersion, mit Ausnahme der letzten Stufe, vorliegt, beziehen.

Die Saat, die zu Beginn der Polymerisation der ersten Stufe eingesetzt wird kann auch in situ hergestellt werden und besteht bevorzugt aus Acrylsäure, Methacrylsäure , Estern der Acrylsäure und Methacrylsäure oder Gemischen davon. Insbesonders bevorzugt sind Gemische aus n-Butylacrylat, Methylmethacrylat und Methacrylsäure.

Die mittlere Teilchengrösse des Saatpolymers im ungequollenen Zustand 40 bis 100 nm beträgt, bevorzugt 60 bis 90 nm.

Die Quellsaat enthält 0 bis 100 Gew.-%, bevorzugt 55 bis 80 Gew.-%, eines nicht-ionisch ethylenisch ungesättigten Monomers und 0 bis 45 Gew.-%, bevorzugt 20 bis 35 Gew.% eines monoethylenisch ungesättigten hydrophilen Monomers.

Das Gewichtsverhältnis der Quellsaat (ii) zu dem Saatpolymer (i) beträgt 2 : 1 bis 50 : 1, bevorzugt 2 : 1 bis 30 : 1. Die mittlere Teilchengröße im ungequollenen Zustand des Kernstufenpolymers, bestehend aus Saat (i) und Quellsaat (ii), beträgt 100 bis 400 nm, bevorzugt 100 bis 250 nm.

Kernstufenpolymers, bestehend aus Saat (i) und Quellsaat (ii), beträgt 100 bis 400 nm, bevorzugt 100 bis 250 nm.

Die Glasübergangstemperatur bestimmt nach der Fox-Gleichung (John Wiley & Sons Ltd., Baffins Lane, Chichester, England, 1997) des Kernstufenpolymers liegt zwischen -20°C und 150°C.

Unter den nicht-ionisch ethylenisch ungesättigten Monomeren versteht man Styrol, Vinyltoluol, Ethylen, Butadien, Vinylacetat, Vinylchlorid, Vinylidenchlorid, Acrylnitril, Acrylamid, Methacrylamid, $(C_1-C_{20})$Alkyl- oder $(C_3-C_{20})$Alkenylester der Acryl- oder Methacrylsäure, Methacrylat, Methylmethacrylat, Ethylacrylat, Ethylmethacrylat, Butylacrylat, Butylmethacrylat, 2-Ethylhexylacrylat, 2-Ethylhexylmethacrylat, Benzylacrylat, Benzylmethacrylat, Laurylacrylat, Laurylmethacrylat, Oleylacrylat, Oleylmethacrylat, Palmitylacrylat, Palmitylmethacrylat, Stearylacrylat, Stearylmethacrylat, Hydroxylgruppen enthaltende Monomere, insbesondere $C_1-C_{10}$-Hydroxyalkyl(meth)acrylate, wie Hydroxyethyl(meth)acrylat, Hydroxypropyl(meth)acrylat, Glycidyl(meth)acrylat, Rizinolsäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure.

Unter den monoethylenisch ungesättigten hydrophilen Monomeren versteht man Acrylsäure, Methacrylsäure, Acryloxypropionsäure, Methacryloxypropionsäure, Acryloxyessigsäure, Methacryloxyessigsäure, Crotonsäure, Aconitsäure, Itakonsäure, Monomethylmaleat, Maleinsäure, Monomethylitakonat, Maleinsäureanhydrid, Fumarsäure, Monomethylfumarat, Itakonsäureanhydrid, Itakonsäuremonomethylester.

Die erste Schale (iii) enthält 85 bis 99,9 Gew.% mindestens eines nicht-ionisch ethylenisch ungesättigten Monomers, bevorzugt 90 bis 99,9 Gew.% , sowie 0,1 bis 15 Gew.-%, bevorzugt 0,1 bis 10 Gew.-% mindestens eines hydrophilen monoethylenisch ungesättigten Monomers.

Unter den nicht-ionisch ethylenisch ungesättigten Monomeren versteht man Styrol, Vinyltoluol, Ethylen, Butadien, Vinylacetat, Vinylchlorid, Vinylidenchlorid, Acrylnitril, Acrylamid, Methacrylamid, $(C_1-C_{20})$Alkyl- oder $(C_3-C_{20})$Alkenylester der Acryl- oder Methacrylsäure, Methacrylat, Methylmethacrylat, Ethylacrylat, Ethylmethacrylat, Butylacrylat, Butylmethacrylat, 2-Ethylhexylacrylat, 2-Ethylhexylmethacrylat, Benzylacrylat, Benzylmethyacrylat, Laurylacrylat, Laurylmethacrylat, Oleylacrylat, Oleylmethacrylat, Palmitylacrylat, Palmitylmethacrylat, Stearylacrylat, Stearylmethacrylat, Hydroxylgruppen enthaltende Monomere, insbesondere $C_1-C_{10}$-Hydroxyalkyl(meth)acrylate, wie Hydroxyethyl(meth)acrylat, Hydroxypropyl(meth)acrylat, Glycidyl(meth)acrylat, Rizinolsäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure, bevorzugt Styrol, Acrylnitril, Methacrylamid, Methacrylat, Methylmethacrylat, Ethylacrylat,

**EP 1 904 544 B1**

Ethylmethacrylat, Butylacrylat, Butylmethacrylat, 2-Ethylhexylacrylat, 2-Ethylhexylmethacrylat.

Unter den monoethylenisch ungesättigten hydrophilen Monomeren versteht man Acrylsäure, Methacrylsäure, Acryloxypropionsäure, Methacryloxypropionsäure, Acryloxyessigsäure, Methacryloxyessigsäure, Crotonsäure, Aconitsäure, Itakonsäure, Monomethylmaleat, Maleinsäure, Monomethylitakonat, Maleinsäureanhydrid, Fumarsäure, Monomethylfumarat, bevorzugt Acrylsäure, Methacrylsäure, Itakonsäure, Itakonsäureanhydrid, Itakonsäuremonomethylester.

Diese erste Schale (iii) umschließt das Kernstufenpolymer. Das Gewichtsverhältnis des Kernstufenpolymers zu der ersten Schale (iii) beträgt 20 : 1 bis 1 : 1, bevorzugt 10 : 1 bis 1 : 1, und das Schalenpolymer besitzt eine Glasübergangstemperatur bestimmt nach der Fox-Gleichung zwischen -60°C zu 120°C.

Die Teilchengröße dieser Stufe im ungequollenen Zustand beträgt 120nm bis 500 nm, bevorzugt 150 bis 270 nm.

Die zweite Schale (iv) enthält 85 bis 99,9, bevorzugt 90 bis 99,9 Gew.-% mindestens eines nicht-ionisch ethylenisch ungesättigten Monomers und 0,1 bis 15 Gew.%, bevorzugt 0,1 bis 10 Gew.% mindestens eines hydrophilen monoethylenisch ungesättigten Monomers.

Unter den nicht-ionisch ethylenisch ungesättigten Monomeren versteht man Styrol, Vinyltoluol, Ethylen, Butadien, Vinylacetat, Vinylchlorid, Vinylidenchlorid, Acrylnitril, Acrylamid, Methacrylamid, ($C_1$-$C_{20}$)Alkyl- oder ($C_3$-$C_{20}$)Alkenylester der Acryl- oder Methacrylsäure, Methacrylat, Methylmethacrylat, Ethylacrylat, Ethylmethacrylat, Butylacrylat, Butylmethacrylat, 2-Ethylhexylacrylat, 2-Ethylhexylmethacrylat, Benzylacrylat, Bezylmethylacrylat, Laurylacrylat, Laurylmethacrylat, Oleylacrylat, Oleylmethacrylat, Palmitylacrylat, Palmitylmethacrylat, Stearylacrylat, Stearylmethacrylat, Hydroxylgruppen enthaltende Monomere, insbesondere $C_1$-$C_{10}$-Hydroxyalkyl(meth)acrylate, wie Hydroxyethyl(meth)acrylat, Hydroxypropyl(meth)acrylat, Glycidyl(meth)acrylat, Rizinolsäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure, bevorzugt Styrol, Acrylnitril, Methacrylamid, Methacrylat, Methylmethacrylat, Ethylacrylat, Ethylmethacrylat, Butylacrylat, Butylmethacrylat, 2-Ethythexylacrylat, 2-Ethylhexylmethacrylat.

Unter den monoethylenisch ungesättigten hydrophilen Monomeren versteht man Acrylsäure, Methacrylsäure, Acryloxypropionsäure, Methacryloxypropionsäure, Acryloxyessigsäure, Methacryloxyessigsäure, Crotonsäure, Aconitsäure, Itakonsäure, Monomethylmaleat, Maleinsäure, Monomethyllitakonat, Maleinsäureanhydrid, Fumarsäure, Monomethylfumarat, bevorzugt Acrylsäure, Methacrylsäure, Itakonsäure, Itakonsäureanhydrid, Itakonsäuremonomethylester.

Die erste Schale wird von der zweiten Schale umhüllt und das Gewichtsverhältnis der ersten Schale (iii) zu der zweiten Schale (iv) beträgt 1 : 30 bis 1 : 1, bevorzugt 1 : 20 bis 1 : 1, und das Schalenpolymer besitzt eine Glasübergangstemperatur nach Fox von 50 bis 120°C. Die mittlere Teilchengröße dieser Stufe beträgt 200 bis 1500 nm, bevorzugt 250 bis 600 nm.

Unter dem unter (v) aufgeführten Weichmachermonomer versteht man beispielsweise $\alpha$- Methylstyrol, Ester der 2-Phenylacrylsäure / Atropasäure (z.B. Methyl, Ethyl, n-Propyl, n-Butyl), 2-Methyl-2-buten, 2,3-Dimethyl-2-buten, 1,1-Diphenylethen oder Methyl-2-tert-butylacrylat sowie weitere in J. Brandrup, E.H. Immergut, Polymer Handbook 3rd Edition, II/316ff aufgeführte Monomere. Bevorzugt wird als Weichmachermonomer $\alpha$- Methylstyrol eingesetzt.

Die unter (vi) aufgeführten Neutralisation erfolgt mit einer Base zur Quellung des Kerns und damit Bildung des Hohlteilchens. Als Basen können beispielsweise Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2- Ethoxyethylamin, 3-Ethoxypropylamin, Dimethylethanoiamin, Diisopropanolamin, Morpholin, Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin oder Polyvinylamin eingesetzt werden

Die dritte Schale (vii) enthält 90 bis 99,9, bevorzugt 90 bis 99,9 Gew.-% mindestens eines nicht-ionisch ethylenisch ungesättigten Monomers und 0,1 bis 10, bevorzugt 0,1 bis 5 Gew.-% mindestens eines hydrophilen monoethylenisch ungesättigten Monomers.

Unter den nicht-ionisch ethylenisch ungesättigten Monomeren versteht man Styrol, Vinyltoluol, Ethylen, Butadien, Vinylacetat, Vinylchlorid, Vinylidenchlorid, Acrylnitril, Acrylamid, Methacrylamid, ($C_1$-$C_{20}$)Alkyl- oder ($C_3$-$C_{20}$)Alkenylester der Acryl- oder Methacrylsäure, Methacrylat, Methylmethacrylat, Ethylacrylat, Ethylmethacrylat, Butylacrylat, Butylmethacrylat, 2-Ethylhexylacrylat, 2-Ethylhexylmethacrylat, Benzylacrylat, Bezylmethylacrylat, Laurylacrylat, Laurylmethacrylat, Oleylacrylat, Oleylmethacrylat, Palmitylacrylat, Palmitylmethacrylat, Stearylacrylat, Stearylmethacrylat, Hydroxylgruppen enthaltende Monomere, insbesondere $C_1$-$C_{10}$-Hydroxyaklkyl(meth)acrylate, wie Hydroxyethyl(meth)acrylat, Hydroxypropyl(meth)acrylat, Glycidyl(meth)acrylat, Rizinolsäure, Palmitoleinsäure, Ölsäure, Elaidinsäure, Vaccensäure, Icosensäure, Cetoleinsäure, Erucasäure, Nervonsäure, Linolsäure, Linolensäure, Arachidonsäure, Timnodonsäure, Clupanodonsäure, bevorzugt Styrol, Acrylnitril, Methacrylamid, Methacrylat, Methylmethacrylat, Ethylacrylat, Ethylmethacrylat, Butylacrylat, Butylmethacrylat, 2-Ethylhexylacrylat, 2-Ethylhexylmethacrylat.

Unter den monoethylenisch ungesättigten hydrophilen Monomeren versteht man Acrylsäure, Methacrylsäure, Acryloxypropionsäure, Methacryloxypropionsäure, Acryloxyessigsäure, Methacryloxyessigsäure, Crotonsäure, Aconitsäure, Itakonsäure, Monomethylmaleat, Maleinsäure, Monomethyllitakonat, Maleinsäureanhydrid, Fumarsäure, Monomethylfurmarat, bevorzugt Acrylsäure, Methacrylsäure, Itakonsäure, Itankonsäureanhydrid, Itakonsäuremonomethylester.

Auch die dritte Schale umhüllt die zweite Schale und das Gewichtsverhältnis der dritten zur zweiten Schale beträgt 5 : 1 bis 1 : 2, bevorzugt 3 : 1 bis 1 : 1 und das Schalenpolymer besitzt eine Glasübergangstemperatur nach Fox von 50 bis 120°C.

Werden die erfindungsgemäß hergestellten Polymerisate für den Anstrich verwendet sollte die mittlere Endteilchengröße 300 bis 800 nm betragen, für die Anwendung im Papier und in der Kosmetik 300 bis 2500 nm und für Schäume 300 bis 800 nm.

Im Anstrich können die eingesetzten Pigmente, speziell $TiO_2$, vollständig oder teilweise durch die hier beschriebene Polymerdispersion ersetzt werden. Typischerweise enthalten solche Anstrichmittel u.a. Wasser, Verdickungsmittel, Natronlauge, Pigmentverteiler, Assoziativverdicker, Entschäumer, Biozid, Bindemittel, sowie Filmbildehilfsmittel.

Die Hohlteilchendispersion kann auch für ähnliche Anwendung in anderen Beschichtungen bestehend aus harzartigen Kondensationsprodukten beinhaltend Phenolate und Aminoplaste beinhaltend Hamstoffformaldehyd und Melaminformaldehyd oder andere Kondensate, z.B. wasserdispergierbare Alkyde.

Zudem können polymodale Heteropolymere der beschriebenen Erfindung mit einem hohen Anteil an großen Hohlteilchen und einem kleineren Anteil an kleinen Hohlteilchen, nicht nur ausschließlich als Weißpigment eingesetzt werden, sondern durch den Anteil kleiner Hohlteilchen auch adhesive Eigenschaften aufweisen.

Der Einsatz der Pigmente in Papiercoatings führt zu einer Erhöhung des Papierglanzes. Das lässt sich auf die, anders als bei anorganischen Pigmenten, unter Druck verformbare Hülle zurückführen. Auch die Papierdruckqualität wird gesteigert. Der Austausch von anorganischen Pigmenten gegen die hier beschriebenen organischen Pigmente führt zu einer Erniedrigung der Dichte des Coatings und somit zu leichterem Papier.

In Kosmetika können die Pigmente beispielsweise in Sonnenschutzcremes zur Verstärkung des Lichtschutzes eingesetzt werden. Durch die außergewöhnlichen Lichtstreueigenschaften wird die Wahrscheinlichkeit der Absorbierung von UV-Strahlung durch UV-aktive Substanzen in der Sonnencreme erhöht.

Die Polymerisate können nach üblichen Polymerisationsverfahren der Emulsionspolymerisation hergestellt werden. Es wird bevorzugt unter Ausschluss von Sauerstoff gearbeitet, vorzugsweise in einem Stickstoffstrom. Für die Polymerisationsmethode werden die üblichen Apparaturen verwendet, z.B. Rührkessel, Rührkesselkaskaden, Autoklaven, Rohrreaktoren und Kneter. Die Polymerisation kann in Lösungs- oder Verdünnungsmitteln, wie z.B. Toluol, o-Xylol, p-Xylol, Cumol, Chlorbenzol, Ethylbenzol, technischen Mischungen von Alkylaromaten, Cyclohexan, technischen Aliphatenmischungen, Aceton, Cyclohexanon, Tetrahydrofuran, Dioxan, Glykolen und Glykolderivaten, Polyalkylenglykolen und deren Derivate, Diethylether, tert.-Butylmethylether, Essigsäuremethylester, Isopropanol, Ethanol, Wasser oder Mischungen wie z.B. Isopropanol/Wasser-Mischungen ausgeführt werden.

Die Polymerisation kann bei Temperaturen von 20 bis 300, vorzugsweise von 50 bis 200°C durchgeführt werden.

Die Polymerisation wird vorzugsweise in Gegenwart von Radikale bildenden Verbindungen durchgeführt. Man benötigt von diesen Verbindungen bis zu 30, vorzugsweise 0,05 bis 15, besonders bevorzugt 0,2 bis 8 Gew.-%, bezogen auf die bei der Polymerisation eingesetzten Monomeren. Bei mehrkomponentigen Initiatorsystemen (z.B. Redox-Initiatorsystemen) beziehen sich die vorstehenden Gewichtsangaben auf die Summe der Komponenten.

Geeignete Polymerisationsinitiatoren sind beispielsweise Peroxide, Hydroperoxide, Peroxidisulfate, Percarbonate, Peroxiester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumothydroperoxid, tert.-Butylperneodecanoat, tert.-Amylperpivalat, tert.-Butylperpivalat, tert.-Butylperneohexanoat, tert.-Butylper-2-ethythexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure).

Die Initiatoren können allein oder in Mischung untereinander angewendet werden, z.B. Mischungen aus Wasserstoffperoxid und Natriumperoxidisulfat. Für die Polymerisation in wässrigem Medium werden bevorzugt wasserlösliche Initiatoren eingesetzt.

Auch die bekannten Redox-Initiatorsysteme können als Polymerisationsinitiatoren verwendet werden. Solche Redox-Initiatorsysteme enthalten mindestens eine peroxidhaltige Verbindung in Kombination mit einem Redox-Coinitiator z.B. reduzierend wirkenden Schwefelverbindungen, beispielsweise Bisulfite, Sulfite, Thiosulfate, Dithionite und Tetrathionate von Alkalimetallen und Ammoniumverbindungen. So kann man Kombinationen von Peroxodisulfaten mit Alkalimetall- oder Ammoniumhydrogensulfiten einsetzen, z.B. Ammoniumperoxidisulfat und Ammoniumdisulfit. Die Menge der peroxidhaltigen Verbindung zum Redox-Coinitiator beträgt 30:1 bis 0,05:1.

In Kombination mit den Initiatoren bzw. den Redoxinitiatorsystemen können zusätzlich Übergangsmetallkatalysatoren eingesetzt werden, z.B. Salze von Eisen, Kobalt, Nickel, Kupfer, Vanadium und Mangan. Geeignete Salz sind z.B. Eisen-II-sulfat, Kobalt-IIchlorid, Nickel-II-sulfat, Kupfer-I-chlorid. Bezogen auf Monomeren wird das reduzierend wirkende Übergangsmetallsalz in einer Konzentration von 0,1 ppm bis 1 000 ppm eingesetzt. So kann man Kombinationen von Wasserstoffperoxid mit Eisen-II-Salzen einsetzen, wie beispielsweise 0,5 bis 30 % Wasserstoffperoxid und 0,1 bis 500 ppm Mohrsches Salz.

Auch bei der Polymerisation in organischen Lösungsmitteln können in Kombination mit den obengenannten Initiatoren Redox-Coinitiatoren und/oder Übergangsmetallkatalysatoren mitverwendet werden, z.B. Benzoin, Dimethylanilin, Ascorbinsäure sowie organisch lösliche Komplexe von Schwermetallen, wie Kupfer, Cobalt, Eisen, Mangan, Nickel und Chrom. Die üblicherweise verwendeten Mengen an Redox-Coinitiatoren bzw. Übergangsmetallkatalysatoren betragen hier üblicherweise etwa 0,1 bis 1 000 ppm, bezogen auf die eingesetzten Mengen an Monomeren.

Falls die Reaktionsmischung an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so dass in jedem Temperaturintervall eine ausreichende Konzentration an Radikalen zur Verfügung steht.

Der Initiator kann auch in Stufen zugegeben werden, bzw. die Geschwindigkeit der Initiator-Zugabe kann über die Zeit variiert werden.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, $C_1$- bis $C_4$-Aldehyde, wie Formaldehyd, Acetaldehyd, Propionaldehyd, Hydroxylammoniumsalze wie Hydroxylammoniumsulfat, Ameisensäure, Natriumbisulfit, hypophosphorige Säure bzw. deren Salze oder Isopropanol. Die Polymerisationsregler werden im allgemeinen in Mengen von 0,1 bis 20 Gew.-%, bezogen auf die Monomeren eingesetzt. Auch durch die Wahl des geeigneten Lösungsmittels kann auf das mittlere Molekulargewicht Einfluss genommen werden. So führt die Polymerisation in Gegenwart von Verdünnungsmitteln mit benzylischen H-Atomen, oder in Gegenwart von sekundären Alkoholen wie z. B. Isopropanol zu einer Verringerung des mittleren Molekulargewichtes durch Kettenübertragung.

Polymerisate mit geringem bzw. geringerem Molekulargewicht erhält man auch durch: Variation der Temperatur und/oder der Initiator-Konzentration und/oder der Zulaufgeschwindigkeit der Monomeren.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9 000. Polyethylenglykole bzw. Polypropylenglykole, die für die Herstellung der Diacrylate oder Dimethacrylate verwendet werden, haben vorzugsweise ein Molekulargewicht von jeweils 400 bis 2 000. Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitakonat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z.B. Tegomereä der Th. Goldschmidt AG).

Die Vernetzer werden vorzugsweise in Mengen von 0,1 bis 30 Gew.-%, bezogen auf die zu polymerisierenden Monomere beziehungsweise auf die zu polymerisierenden Monomere einer Stufe, eingesetzt. Die Vernetzer können in jeder Stufe zugegeben werden.

Weiterhin kann es vorteilhaft sein, die Polymertröpfchen bzw. Polymerteilchen durch grenzflächenaktive Hilfsstoffe zu stabilisieren. Typischerweise verwendet man hierzu Emulgatoren oder Schutzkolloide. Es kommen anionische, nichtionische, kationische und amphotere Emulgatoren in Betracht. Anionische Emulgatoren sind beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Emulgatoren können beispielsweise Alkylphenolethoxylate, Primäralkoholethoxilate, Fettsäureethoxilate, Alkanolamidethoxilate, Fettaminethoxilate, EO/PO-Blockcopolymere und Alkylpolyglucoside verwendet werden. Als kationische bzw. amphotere Emulgatoren werden beispielsweise verwendet: Quaternisierte Aminalkoxylate, Alkylbetaine, Alkylamidobetaine und Sulfobetaine.

Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z.B. in DE 2 501 123 beschrieben sind.

Die Emulgatoren oder Schutzkolloide werden üblicherweise in Konzentrationen von 0,05 bis 20 Gew.%, bezogen auf die Monomere, eingesetzt.

Wird in wässriger Lösung oder Verdünnung polymerisiert, so können die Monomere vor oder während der Polymerisation ganz oder teilweise durch Basen neutralisiert werden. Als Basen kommen beispielsweise Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2- Ethoxyethylamin, 3-Ethoxypropylamin, Dimethylethanolamin, Diisopropanolamin oder Morpholin in Frage.

Weiterhin können auch mehrbasische Amine zur Neutralisation eingesetzt werden, wie z.B. Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin oder Polyvinylamin.

Vorzugsweise werden zur partiellen oder vollständigen Neutralisation der ethylepisch ungesättigten Carbonsäuren vor oder während der Polymerisation Ammoniak, Triethanolamin und Diethanolamin eingesetzt.

Besonders bevorzugt werden die ethylenisch ungesättigten Carbonsäuren vor und während der Polymerisation nicht neutralisiert. Die Durchführung der Polymerisation kann nach einer Vielzahl von Varianten kontinuierlich oder diskontinuierlich durchgeführt werden. Üblicherweise legt man einen Teil der Monomeren gegebenenfalls in einem geeigneten Verdünnungsmittel oder Lösungsmittel und gegebenenfalls in Anwesenheit eines Emulgators, eines Schutzkolloids oder weiterer Hilfsstoffe vor, inertisiert, und erhöht die Temperatur bis zum Erreichen der gewünschten Polymerisationstemperatur. Es kann allerdings auch lediglich ein geeignetes Verdünnungsmittel vorgelegt sein. Innerhalb eines definierten Zeitraumes werden der Radikalinitiator, weitere Monomere und sonstige Hilfsstoffe, wie z.B. Regler oder Vernetzer jeweils gegebenenfalls in einem Verdünnungsmittel zudosiert. Die Zulaufzeiten können unterschiedlich lang gewählt werden. Beispielsweise kann man für den Initiatorzulauf eine längere Zulaufzeit wählen als für den Monomerzulauf.

Wird das Polymerisat in einem wasserdampfflüchtigen Lösungsmittel oder Lösungsmittelgemisch hergestellt, so kann das Lösungsmittel durch Einleiten von Wasserdampf abgetrennt werden, um so zu einer wässrigen Lösung oder Dispersion zu gelangen. Das Polymerisat kann von dem organischen Verdünnungsmittel auch durch einen Trocknungsprozess abgetrennt werden.

Experimentelle Methoden

Bestimmung der Glasübergangstemperatur

Die Glasübergangstemperaturen wurden durch theoretische Berechnung per Fox-Gleichung (John Wiley & Sons Ltd., Baffins Lane, Chichester, England, 1997) bestimmt.

$$1/Tg = W_a/T_{ga} + W_b/T_{gb},$$

wobei
$T_{ga}$ und $T_{gb}$ = Glasübergangstemperatur von Polymer "a" und "b"
$W_a$ und $W_b$ = Gewichtsanteil von Polymer "a" und "b"

Messung der Partikelgröße

Die Bestimmung der Teilchengrößen erfolgte mit Hilfe eines Coulter M4+ (Particle Analyzer) oder mit Hilfe der Photonenkorrelations-spektroskopie auch als quasielastische Lichtstreuung oder Dynamische Lichsteuung bekannt (ISO 13321-Norm) mit einem HPPS ( High Performance Particle Sizer) der Fa. Malvern oder mit Hilfe der Hydrodynamischen Fraktionierung mit einem PSDA (Particle Size Distribution Analyser) der Fa. Polymer Labs.

Durchführung der Weißgradmessung

In ein Gefäß werden 6g der unten beschriebenen Farbpaste und 1g der ca. 30%igen Hohlteilchendispersion abgewogen, die Mischung wird - ohne Luft einzurühren - homogenisiert. Mit Hilfe eines 200μm-Rakels wird mit einer Geschwindigkeit von 0.9cm/sec ein Film dieser Mischung auf eine schwarze Kunststoff-Folie (matte Ausführung, Artikel-Nr. 13.41 EG 870934001, Bernd Schwegmann GmbH & Co. KG, D) ausgezogen. Die Proben werden bei 23°C und einer relativen Luftfeuchtigkeit von 40-50% 24h getrocknet. Im Anschluss daran wird mit einem Spektrophotometer der Marke "Minolta CM-508i" der Weißgrad an drei verschieden Stellen gemessen. Die Messpunkte werden markiert, um in der Folge mit einer Mikrometerschraube die entsprechenden Schichtdicken des Farbfilms durch Differenzmessung relativ zur unbeschichteten Kunststoff-Folie zu bestimmen. Nach Berechnung einer durchschnittlichen Schichtdicke sowie eines durchschnittlichen Weißgrades aus den drei Einzelmessungen erfolgt schlussendlich eine Normierung des dabei erhaltenen Weißgrades auf eine Trockenschichtdicke von 50 $\mu$m durch lineare Extrapolation. Die hierfür nötige Kalibrierung erfolgte durch Weißgradmessung einer.Standard-Hohlteilchendispersion in einem Trockenschichtdicken-Bereich von ca. 30-60 $\mu$m.

Beispiele

Herstellung der Farbpaste

A) In einem Gefäß werden 240 g Wasser vorgelegt und danach die folgenden Einsatzstoffe in der angegebenen Reihenfolge unter einem Dissolver bei ca. 1000 upm zugegeben und für insgesamt ca. 15 Minuten bis zur Homogenität gerührt :

2,5g Natrosol® 250 HR (Hydroxyethylcellulose-Verdickungsmittel der Firma Hercules GmbH), 1g 10%ige Natronlauge, 6g Pigmentverteiler® MD 20 (Copolymer aus Maleinsäure und Diisobutylen der Firma BASF AG), 10g Collacral® LR 8990 (Polyurethan-Assoziatiwerdicker der Firma BASF AG), 3g Agitan® E 255 (Siloxan-Entschäumer der Firma Münzing Chemie GmbH), 2g Proxel® BD 20 (Biozid der Firma Avecia Inc.), 370g Acronal® A 684 (Bindemittel, 50%ige Dispersion der Firma BASF AG), 20g Texanol® (Filmbildehilfsmittel der Firma Eastman Chemical Company), 2g Agitan® E 255 (Siloxan-Entschäumer der Firma Münzing Chemie GmbH), 10g 5%ig Collacral LR 8989 (PolyurethanChemie GmbH), 10g 5%ig Collacral LR 8989 (Polyurethan-Assoziatiwerdicker der Firma BASF AG).

B) In einem Gefäß werden 250 g Wasser vorgelegt und danach die folgenden Einsatzstoffe in der angegebenen Reihenfolge unter einem Dissolver bei ca. 1000 upm zugegeben und für insgesamt ca. 15 Minuten bis zur Homogenität gerührt:

2,5g Natrosol® 250 HR (Hydroxyethylcellulose-Verdickungsmittel der Firma Hercules GmbH), 1g 10%ige Natronlauge, 6g Pigmentverteiler® MD 20 (Copolymer aus Maleinsäure und Diisobutylen der Firma BASF AG), 10g Collacral® LR 8990 (Polyurethan-Assoziativverdicker der Firma BASF AG), 3g Agitan® E 255 (Siloxan-Entschäumer der Firma Münzing Chemie GmbH), 2g Proxel® BD 20 (Biozid der Firma Avecia Inc.), 203g Kronos 2300, 370g Acronal® A 684 (Bindemittel, 50%ige Dispersion der Firma BASF AG), 20g Texanol® (Filmbildehilfsmittel der Firma Eastman Chemical Company), 2g Agitan® E 255 (Siloxan-Entschäumer der Firma Münzing Chemie GmbH), 10g 5%ig Collacral LR 8989 (Polyurethan-Assoziatiwerdicker der Firma BASF AG), 116g Hohlteilchendispersion.

Dispersion A (Saat)

Aus 230 g Wasser, 2,17 g Arylsulfonat (15%ig), 338 g n-Butylacrylat, 303,6 g Methylmethacrylat und 8,45 g Methacrylsäure wurde eine Voremulsion hergestellt. Die Vorlage, bestehend aus 2356 g Wasser, 32,0 g Arylsulfonat (15%ig) sowie 41,2 g der Voremulsion, wurde in einem Polymerisationsgefäß, welches mit einem Ankerrührer, Rückflusskühler und zwei Zulaufgefäßen ausgestattet war, in einer Stickstoffatmosphäre auf eine Temperatur von 80°C geheizt und nach Zugabe von 14 g einer 22,4%igen Ammoniumpersulfat-Lösung 15 min anpolymerisiert. Dann wurde der Rest der Voremulsion innerhalb von 60 min bei 80°C zudosiert. Anschließend wurde noch 15 min nachpolymerisiert und innerhalb von 20 min auf 55°C abgekühlt. Zur Abreicherung der Restmonomeren wurden dann 6,5 g einer 10%igen tert-Butylhydroperoxid-Lösung sowie 8,1 g einer 5%igen Rongalit C-Lösung zum Reaktionsgemisch zugegeben, nach dem Abkühlen auf 30°C wurde durch Zugabe von 8,1 g 25%igerAmmoniak-Lösung der pH-Wert der Dispersion eingestellt.

Feststoffgehalt: 19,7%
pH-Wert: 2,6
Teilchengröße (AUZ, D50): 47 nm

Dispersion B1 (Quellkern)

Die Vorlage, bestehend aus 1455 g Wasser und 63,2 g von Dispersion A, wurde in einem Polymerisationsgefäß, welches mit einem Ankerrührer, Rückflusskühler und zwei Zulaufgefäßen ausgestattet war, in einer Stickstoffatmosphäre auf eine Temperatur von 79°C geheizt und nach Zugabe von 10 g einer 2,5%igen Natriumpersulfat-Lösung 5 min anpolymerisiert. Dann wurde Voremulsion 1, bestehend aus 262 g Wasser, 3,33 g Arylsulfonat (15%ig), 20,75 g Lutensit A-EP (Säureform, 20%ig), 186,6 g Methylmethacrylat und 124,4 g Methacrylsäure, innerhalb von 113 min bei 79°C zudosiert. Im Anschluss daran wurde Voremulsion 2, bestehend aus 254 g Wasser, 2,67 g Arylsulfonat (15%ig), 187 g Methylmethacrylat und 2,05 g Methacrylsäure, zusammen mit 22 g einer 2,5%igen Natriumpersulfat-Lösung innerhalb von 67 min bei 79°C zudosiert. Abschließend wurde noch 30 min nachpolymerisiert.

Feststoffgehalt: 19,9%
pH-Wert: 2,5
Teilchengröße (Autosizer): 195 nm

Dispersion B2 (Quellkern)

Die Vorlage, bestehend aus 1455 g Wasser und 42,0 g von Dispersion A, wurde in einem Polymerisationsgefäß, welches mit einem Ankerrührer, Rückflusskühler und zwei Zulaufgefäßen ausgestattet war, in einer Stickstoffatmosphäre auf eine Temperatur von 79°C geheizt und nach Zugabe von 10 g einer 2,5%igen Natriumpersulfat-Lösung 5 min anpolymerisiert. Dann wurde Voremulsion 1, bestehend aus 262 g Wasser, 3,33 g Arylsulfonat (15%ig), 20,75 g Lutensit A-EP (Säureform, 20%ig), 211,8 g Methylmethacrylat und 104,3 g Methacrylsäure, innerhalb von 113 min bei 79°C zudosiert. Im Anschluss daran wurde Voremulsion 2, bestehend aus 254 g Wasser, 2,67 g Arylsulfonat (15%ig), 186 g Methylmethacrylat und 2,05 g Methacrylsäure, zusammen mit 22 g einer 2,5%igen Natriumpersulfat-Lösung innerhalb von 67 min bei 79°C zudosiert. Abschließend wurde noch 30 min nachpolymerisiert.

Feststoffgehalt: 19,7%
pH-Wert: 2,9
Teilchengröße (Autosizer): 211 nm

Dispersion B3 (Quellkern)

Die Vorlage, bestehend aus 1009 g Wasser und 28,7 g von Acronal A 508, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt und nach Zugabe von 20,2 g einer 2,5%igen Natriumpersulfat-Lösung 5 min an polymerisiert. Dann wurde Voremulsion 1, bestehend aus 163 g Wasser, 2,24 g Arylsulfonat (15%ig), 13,95 g Lutensit A-EPA (teilneutralisiert, 20%ig), 124,9 g Methylmethacrylat, 83,6 g Methacrylsäure und 0,50 g Allylmethacrylat, innerhalb von 70 min bei 82°C zudosiert. Nach Ende des Zulaufs wurden 3,0 g einer 2,5%igen Natriumpersulfat-Lösung zugegeben und 5 min gerührt. Im Anschluss daran wurde Voremulsion 2, bestehend aus 171 g Wasser, 1,79 g Arylsulfonat (15%ig), 112 g Methylmethacrylat, 13,8 g n-Butylacrylat und 1,38 g Methacrylsäure, zusammen mit 12 g einer 2,5%igen Natriumpersulfat-Lösung innerhalb von 70 min bei 82°C zudosiert. Abschließend wurde noch 30 min nachpolymerisiert.

Feststoffgehalt: 19,8%
pH-Wert: 4,4
Teilchengröße (Autosizer): 207 nm

Dispersion B4 (Quellkern)

Die Vorlage, bestehend aus 1542 g Wasser und 44,2 g von Dispersion A, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt und nach Zugabe von 10,6 g einer 2,5%igen Natriumpersulfat-Lösung 5 min an polymerisiert. Dann wurde Voremulsion 1, bestehend aus 277 g Wasser, 3,53 g Arylsulfonat (15%ig), 22,00 g Lutensit A-EP (Säureform, 20%ig), 222,6 g Methylmethacrylat und 109,7 g Methacrylsäure, innerhalb von 113 min zudosiert, dabei wurde die Polymerisationstemperatur kontinuierlich von 82°C auf 80°C abgesenkt. Im Anschluss daran wurde Voremulsion 2, bestehend aus 269 g Wasser, 2,83 g Arylsulfonat (15%ig), 196 g Methylmethacrylat und 2,17 g Methacrylsäure, zusammen mit 23 g einer 2,5%igen Natriumpersulfat-Lösung innerhalb von 67 min bei 80°C zudosiert. Abschließend wurde noch 30 min nachpolymerisiert.

Feststoffgehalt: 19,7%
pH-Wert: 2,7
Teilchengröße (Autosizer): 215 nm

Dispersion B5 (Quellkern)

Die Vorlage, bestehend aus 1009 g Wasser und 28,7 g von Acronal A 508, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt und nach Zugabe von 20,2 g einer 2,5%igen Natriumpersulfat-Lösung 5 min anpolymerisiert. Dann wurde Voremulsion 1, bestehend aus 163 g Wasser, 2,24 g Arylsulfonat (15%ig), 13,95 g Lutensit A-EPA (teilneutralisiert, 20%ig), 125,0 g Methylmethacrylat, 83,6 g Methacrylsäure und 0,34 g Allylmethacrylat, innerhalb von 70 min bei 82°C zudosiert. Nach Ende des Zulaufs wurden 3,0 g einer 2,5%igen Natriumpersulfat-Lösung zugegeben und 5 min gerührt. Im Anschluss daran wurde Voremulsion 2, bestehend aus 171 g Wasser, 1,79 g Arylsulfonat (15%ig), 112 g Methylmethacrylat, 13,8 g n-Butylacrylat und 1,38 g Methacrylsäure, zusammen mit 12 g einer 2,5%igen Natriumpersulfat-Lösung innerhalb von 70 min bei 82°C zudosiert. Abschließend wurde noch 30 min nachpolymerisiert.

Feststoffgehalt: 19,8%
pH-Wert: 4,4
Teilchengröße (Autosizer): 220 nm

Dispersion B6 (Quellkern)

Die Vorlage, bestehend aus 1613 g Wasser und 45,2 g von Acronal A 508, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt und nach Zugabe von 10,6 g einer 2,5%igen Natriumpersulfat-Lösung 5 min an polymerisiert. Dann wurde Voremulsion 1, bestehend aus 127 g Wasser, 1,77 g Arylsulfonat (15%ig), 11,13 g Lutensit A-EPA (teilneutralisiert, 20%ig), 99,1 g Methylmethacrylat und 65,7 g Methacrylsäure, innerhalb von 70 min bei 82°C zudosiert. Gleichzeitig wurde Voremulsion 2, bestehend aus 127 g Wasser, 1,77 g Arylsulfonat (15%ig), 11,13 g Lutensit A-EPA (teilneutralisiert, 20%ig), 110,1 g Methylmethacrylat, 54,2 g Methacrylsäure und 0,53 g Allylmethacrylat, innerhalb von 70 min in Voremulsion 1 dosiert (Power-Feed-Fahrweise). Nach Ende der Zuläufe wurden 4,7 g einer 2,5%igen Natriumpersulfat-Lösung zugegeben und 5 min gerührt. Im Anschluss daran wurde Voremulsion 3, bestehend aus 269 g Wasser, 2,83 g Arylsulfonat (15%ig), 176 g Methylmethacrylat, 21,7 g n-Butylacrylat und 2,17 g Methacrylsäure, zusammen mit 19 g einer 2,5%igen Natriumpersulfat-Lösung innerhalb von 70 min bei 82°C zudosiert. Abschließend wurde noch 30 min nachpolymerisiert.

Feststoffgehalt: 19,8%
pH-Wert: 4,3
Teilchengröße (Autosizer): 210 nm

Dispersion B7 (Quellkern)

Die Vorlage, bestehend aus 1589 g Wasser und 45,2 g von Acronal A 508, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt und nach Zugabe von 10,6 g einer 2,5%igen Natriumpersulfat-Lösung 5 min anpolymerisiert. Dann wurde Voremulsion 1, bestehend aus 277 g Wasser, 3,53 g Arylsulfonat (15%ig), 22,00 g Lutensit A-EPA (teilneutralisiert, 20%ig), 222,1 g Methylmethacrylat, 0,53 g Allylmethacrylat und 109,7 g Methacrylsäure, innerhalb von 70 min bei 82°C zudosiert. Nach Ende des Zulaufs wurden 4,7 g einer 2,5%igen Natriumpersulfat-Lösung zugegeben und 5 min gerührt. Im Anschluss daran wurde Voremulsion 2, bestehend aus 269 g Wasser, 2,83 g Arylsulfonat (15%ig), 196 g Methylmethacrylat und 2,17 g Methacrylsäure, zusammen mit 23 g einer 2,5%igen Natriumpersulfat-Lösung innerhalb von 70 min bei 82°C zudosiert. Abschließend wurde noch 30 min nachpolymerisiert.

Feststoffgehalt: 19,7%
pH-Wert: 4,8
Teilchengröße (Autosizer): 209 nm

Dispersion B8 (Quellkern)

Die Vorlage, bestehend aus 986 g Wasser und 28,2 g von Acronal A 508, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt und nach Zugabe von 20,9 g einer 2,5%igen Natriumpersulfat-Lösung 5 min anpolymerisiert. Dann wurde Voremulsion 1, bestehend aus 161 g Wasser, 2,20 g Arylsulfonat (15%ig), 13,70 g Lutensit A-EPA (teilneutralisiert, 20%ig), 0,07 g *tert*-Dodecylmercaptan, 136,3 g Methylmethacrylat, 0,66 g Allylmethacrylat und 68,3 g Methacrylsäure, innerhalb von 70 min bei 82°C zudosiert. Nach Ende des Zulaufs wurden 2,9 g einer 2,5%igen Natriumpersulfat-Lösung zugegeben und 5 min gerührt. Im Anschluss daran wurde Voremulsion 2, bestehend aus 167 g Wasser, 1,76 g Arylsulfonat (15%ig), 110 g Methylmethacrylat, 13,5 g n-Butylacrylat und 1,35 g Methacrylsäure, zusammen mit 12 g einer 2,5%igen Natriumpersulfat-Lösung innerhalb von 70 min bei 82°C zudosiert. Abschließend wurde noch 30 min nachpolymerisiert.

Feststoffgehalt: 19,7%
pH-Wert: 4,3
Teilchengröße (Autosizer): 213 nm

Dispersion C1:

Die Vorlage, bestehend aus 513 g Wasser und 158,3 g von Dispersion B1, wurde in einem Polymerisationsgefäß, welches mit einem Ankerrührer, Rückflusskühler und zwei Zulaufgefäßen ausgestattet war, in einer Stickstoffatmosphäre auf eine Temperatur von 80°C geheizt und nach Zugabe von 14,4 g einer 2,5%igen Natriumpersulfat-Lösung 5 min anpolymerisiert. Dann wurde Voremulsion 1, bestehend aus 158 g Wasser, 6,6 g Arylsulfonat (15%ig), 11,3 g Methacrylsäure und 180 g Styrol, zusammen mit 18,3 g einer 2,5%igen Natriumpersulfat-Lösung innerhalb von 80 min bei 80°C beginnend zudosiert, gegen Ende des Zulaufs wurde die Innentemperatur auf 92°C erhöht und der Natriumpersulfat-Zulauf gestoppt. Nach Ende des Emulsions-Zulaufs wurde Voremulsion 2, bestehend aus 16 g Wasser, 0,6 g Arylsulfonat (15%ig) und 15,8 g α-Methylstyrol zugegeben und 5 min gerührt, dann erfolgte die Zugabe von 30 g 10%igen Ammoniak-Wasser; die Reaktionsmischung wurde weitere 15 min bei 92°C gerührt. Im Anschluss daran wurden 4,0 g einer 2,5%igen Natriumpersulfat-Lösung innerhalb von 3 min zudosiert. Voremulsion 3, bestehend aus 210 g Wasser, 7,5 g Arylsulfonat (15%ig), 22,5 g Methylmethacrylat und 221 g Styrol, zusammen mit 27,4 g einer 2,5%igen Natriumpersulfat-Lösung innerhalb von 100 min bei 92°C zudosiert. Abschließend wurde noch 30 min nachpolymerisiert. Zur Reduktion der Restmonomeren wurde abschließend noch eine chemische Desodorierung durchgeführt. Hierzu wurden parallel 13,5 g einer 10%igen tertButylhydroperoxid-Lösung sowie 13,5 g einer 10%igen Ascorbinsäure-Lösung innerhalb von 60 min bei 92°C zur Reaktionsmischung zudosiert.

Feststoffgehalt: 29,9%
pH-Wert: 7,6

Dispersion C1V

Die Synthese erfolgte analog zur Herstellung von Dispersion C1 mit dem Unterschied, dass die Voremulsion 2 statt α-Methylstyrol die gleiche Menge an Methylmethacrylat enthielt.

Feststoffgehalt: 29,5%
pH-Wert: 8,8.

Dispersion C2V

Die Synthese erfolgte analog zur Herstellung von Dispersion C1 mit dem Unterschied, dass die Voremulsion 2 statt α-Methylstyrol die gleiche Menge an Styrol enthielt.

Feststoffgehalt: 29,5%
pH-Wert: 8,9

Dispersion C3V

Die Synthese erfolgte analog zur Herstellung von Dispersion C1 mit dem Unterschied, dass die Voremulsion 2 statt α-Methylstyrol die gleiche Menge an Styrol enthielt sowie zusätzlich 0,45 g Irganox HP 2215 (Inhibitor der Firma Ciba Speciality Chemicals).

Feststoffgehalt: 29,2%

pH-Wert: 8,5

Tabelle 1: Zusammenfassung der Ergebnisse:

| Versuch | C1 | C1V | C2V | C3V |
|---|---|---|---|---|
| Restmonomer [ppm]: | | | | |
| vor pH | 16000 | 2000 | 3500 | 6400 |
| nach pH | 13000 | 800 | 3100 | 3300 |
| nach 5 min VE3 | 4700 | 500 | 5800 | 17900 |
| Teilchengröße [nm]: | | | | |
| vor pH | 385 | 377 | 377 | n.b. |
| nach pH | 438 | 400 | 422 | n.b. |
| nach 5 min VE3 | 451 | 455 | 443 | n.b. |
| Weißgrad: | | | | |
| Endprobe | 69 | 49 | 54 | 56 |

Wie aus obiger Tabelle leicht ersichtlich, verhält sich nur Probe C1 ideal und liefert mit Abstand den höchsten Weißgrad. C1 zeigt einen idealen Verlauf der Restmonomere während des Quellprozesses, d.h. Maximalwert zum Zeitpunkt der Ammoniakzugabe ohne nennenswerten Abfall sowie deutliche Reduktion nach Zugabe von Voremulsion 3. Im Gegensatz zum eben beschrieben, idealen Verhalten werden Methylmethacrylat und Styrol als Quellmonomere sehr schnell abgebaut (C1V + C2V), auch die Zugabe von Inhibitor kann dies nicht verhindern (C3V). Letzteres wirkt sich vielmehr desasträs auf die anschließende Weiterpolymerisation nach Zugabe der Voremulsion 3 aus. Diese Steuerung der Quellkinetik spiegelt sich auch im Verlauf der Teilchengrößen-Zunahme wieder. Nur im Falle von C1 geschieht die hauptsächliche Expansion zum gewünschten Zeitpunkt, d.h. direkt nach pH-Stellung. In den anderen Fällen wächst das Teilchen auch noch deutlich während Polymerisation der stabilisierenden Hülle, was offensichtlich in einem schlechteren Weißgrad resultiert.

Weitere erfindungsgemäße Hohlteilchen-Dispersionen:

Dispersion C2a:

Die Vorlage, bestehend aus 501 g Wasser und 152,0 g von Dispersion B2, wurde in einem Polymerisationsgefäß, welches mit einem Ankerrührer, Rückflusskühler und zwei Zulaufgefäßen ausgestattet war, in einer Stickstoffatmosphäre auf eine Temperatur von 80°C geheizt und nach Zugabe von 14,4 g einer 2,5%igen Natriumpersulfat-Lösung 5 min anpolymerisiert. Dann wurde Voremulsion 1, bestehend aus 158 g Wasser, 6,6 g Arylsulfonat (15%ig), 9,7 g Methacrylsäure und 155 g Styrol, zusammen mit 16,7 g einer 2,5%igen Natriumpersulfat-Lösung innerhalb von 80 min bei 80°C beginnend zudosiert, gegen Ende des Zulaufs wurde die Innentemperatur auf 92°C erhöht und der Natriumpersulfat-Zulauf gestoppt. Nach Ende des Emulsions-Zulaufs wurde Voremulsion 2, bestehend aus 16 g Wasser, 0,6 g Arylsulfonat (15%ig) und 13,5 g $\alpha$-Methylstyrol zugegeben und 5 min gerührt, dann erfolgte die Zugabe von 26 g 10%igen Ammoniak-Wasser; die Reaktionsmischung wurde weitere 15 min bei 92°C gerührt. Im Anschluss daran wurden 4,0 g einer 2,5%igen Natriumpersulfat-Lösung innerhalb von 3 min zudosiert. Voremulsion 3, bestehend aus 229 g Wasser, 7,5 g Arylsulfonat (15%ig), 25,2 g Methylmethacrylat und 247 g Styrol, zusammen mit 29,0 g einer 2,5%igen Natriumpersulfat-Lösung innerhalb von 100 min bei 92°C zudosiert. Abschließend wurde noch 30 min nachpolymerisiert. Zur Reduktion der Restmonomeren wurde abschließend noch eine chemische Desodorierung durchgeführt. Hierzu wurden parallel 13,5 g einer 10%igen *tert*Butylhydroperoxid-Lösung sowie 13,5 g einer 10%igen Ascorbinsäure-Lösung innerhalb von 60 min bei 92°C zur Reaktionsmischung zudosiert.

Feststoffgehalt: 28,5%
pH-Wert: 8,7
Teilchengröße (Autosizer): 731 nm (0,13 Polydispersität)
Weißgrad: 74

Dispersion C2b:

Die Vorlage, bestehend aus 486 g Wasser und 174,7 g von Dispersion B2, wurde in einem Polymerisationsgefäß, welches mit einem Ankerrührer, Rückflusskühler und zwei Zulaufgefäßen ausgestattet war, in einer Stickstoffatmosphäre auf eine Temperatur von 80°C geheizt und nach Zugabe von 14,4 g einer 2,5%igen Natriumpersulfat-Lösung 5 min anpolymerisiert. Dann wurde Voremulsion 1, bestehend aus 179 g Wasser, 7,5 g Arylsulfonat (15%ig), 11,0 g Methacrylsäure und 176 g Styrol, zusammen mit 18,9 g einer 2,5%igen Natriumpersulfat-Lösung innerhalb von 90 min bei 80°C beginnend zudosiert, gegen Ende des Zulaufs wurde die Innentemperatur auf 92°C erhöht und der Natriumpersulfat-Zulauf gestoppt. Nach Ende des Emulsions-Zulaufs wurde Voremulsion 2, bestehend aus 16 g Wasser, 0,6 g Arylsulfonat (15%ig) und 15,3 g $\alpha$-Methylstyrol zugegeben und 5 min gerührt, dann erfolgte die Zugabe von 29 g 10%igen Ammoniak-Wasser; die Reaktionsmischung wurde weitere 15 min bei 92°C gerührt. Im Anschluss daran wurden 4,0 g einer 2,5%igen Natriumpersulfat-Lösung innerhalb von 3 min zudosiert. Voremulsion 3, bestehend aus 207 g Wasser, 6,6 g Arylsulfonat (15%ig), 22,7 g Methylmethacrylat und 225 g Styrol, zusammen mit 26,7 g einer 2,5%igen Natriumpersulfat-Lösung innerhalb von 90 min bei 92°C zudosiert. Abschließend wurde noch 30 min nachpolymerisiert. Zur Reduktion der Restmonomeren wurde abschließend noch eine chemische Desodorierung durchgeführt. Hierzu wurden parallel 13,5 g einer 10%igen tertButylhydroperoxid-Lösung sowie 13,5 g einer 10%igen Ascorbinsäure-Lösung innerhalb von 60 min bei 92°C zur Reaktionsmischung zudosiert.

Feststoffgehalt: 29,3%
pH-Wert: 8,7
Teilchengröße (Autosizer): 719 nm (0,18 PD)
Weißgrad: 70

Dispersion C3:

Die Vorlage, bestehend aus 486 g Wasser und 181,2 g von Dispersion B3, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt und nach Zugabe von 14,4 g einer 2,5%igen Natriumpersulfat-Lösung 5 min anpolymerisiert. Dann wurde Voremulsion 1, bestehend aus 179 g Wasser, 7,5 g Arylsulfonat (15%ig), 11,0 g Methacrylsäure und 176 g Styrol, zusammen mit 18,9 g einer 2,5%igen Natriumpersulfat-Lösung innerhalb von 90 min bei 82°C zudosiert. Nach Ende beider Zuläufe wurde die Innentemperatur innerhalb von 30 min auf 92°C erhöht und dann Voremulsion 2, bestehend aus 16 g Wasser, 0,6 g Arylsulfonat (15%ig) und 15,3 g $\alpha$-Methylstyrol zugegeben und 5 min gerührt, dann erfolgte die Zugabe von 29 g 10%igen Ammoniak-Wasser; die Reaktionsmischung wurde weitere 15 min bei 92°C gerührt. Im Anschluss daran wurden 4,0 g einer 2,5%igen Natriumpersulfat-Lösung innerhalb von 3 min zudosiert. Voremulsion 3, bestehend aus 177 g Wasser, 6,6 g Arylsulfonat (15%ig), 22,7 g Methylmethacrylat und 223 g Styrol, zusammen mit 26,7 g einer 2,5%igen Natriumpersulfat-Lösung innerhalb von 115 min bei 92°C zudosiert. Nach 55 min Zulaufzeit wurden 32,1 g 7%ige Itakonsäure zur Voremulsion 3 hinzugefügt. Abschließend wurde noch 30 min nachpolymerisiert. Zur Reduktion der Restmonomeren wurde abschließend noch eine chemische Desodorierung durchgeführt. Hierzu wurden parallel 13,5 g einer 10%igen *tert*Butylhydroperoxid-Lösung sowie 13,5 g einer 10%igen Ascorbinsäure-Lösung innerhalb von 60 min bei 92°C zur Reaktionsmischung zudosiert.

Feststoffgehalt: 29,1%
pH-Wert: 7,0
Teilchengröße (Autosizer): 519 nm (0,09 PD)
Weißgrad: 73

Dispersion C4:

Die Vorlage, bestehend aus 431 g Wasser und 155,3 g von Dispersion B4, wurde in einem Polymerisationsgefäß, welches mit einem Ankerrührer, Rückflusskühler und zwei Zulaufgefäßen ausgestattet war, in einer Stickstoffatmosphäre auf eine Temperatur von 80°C geheizt und nach Zugabe von 12,8 g einer 2,5%igen Natriumpersulfat-Lösung 5 min anpolymerisiert. Dann wurde Voremulsion 1, bestehend aus 159 g Wasser, 6,7 g Arylsulfonat (15%ig), 9,8 g Methacrylsäure und 156 g Styrol, zusammen mit 16,8 g einer 2,5%igen Natriumpersulfat-Lösung innerhalb von 90 min bei 80°C beginnend zudosiert, gegen Ende des Zulaufs wurde die Innentemperatur auf 92°C erhöht und der Natriumpersulfat-Zulauf gestoppt. Nach Ende des Emulsions-Zulaufs wurde Voremulsion 2, bestehend aus 14 g Wasser, 0,5 g Arylsulfonat (15%ig) und 13,6 g $\alpha$-Methylstyrol zugegeben und 5 min gerührt, dann erfolgte die Zugabe von 26 g 10%igen Ammoniak-Wasser; die Reaktionsmischung wurde weitere 15 min bei 92°C gerührt. Im Anschluss daran wurden 3,6 g einer 2,5%igen Natriumpersulfat-Lösung innerhalb von 3 min zudosiert. Voremulsion 3, bestehend aus 158 g Wasser, 5,9 g Arylsulfonat (15%ig), 20,2 g Methylmethacrylat und 198 g Styrol, zusammen mit 23,7 g einer 2,5%igen Natriumpersulfat-Lösung innerhalb von 90 min bei 92°C zudosiert. Nach 45 min Zulaufzeit wurden 28,6 g 7%ige Itakonsäure zur Voremulsion 3 hinzugefügt. Abschließend wurde noch 30 min nachpolymerisiert. Zur Reduktion der Restmonomeren wurde abschließend noch eine chemische Desodorierung durchgeführt. Hierzu wurden parallel 12,0 g einer 10%igen tertButylhydroperoxid-Lösung sowie 12,0 g einer 10%igen Ascorbinsäure-Lösung innerhalb von 60 min bei 92°C zur Reaktionsmischung zudosiert.

Feststoffgehalt: 28,8%
pH-Wert: 8,0
Teilchengröße (Autosizer): nicht messbar
Weißgrad: 72

Dispersion C5:

Die Vorlage, bestehend aus 458 g Wasser und 154,5 g von Dispersion B5, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt und nach Zugabe von 12,8 g einer 2,5%igen Natriumpersulfat-Lösung 5 min an polymerisiert. Dann wurde Voremulsion 1, bestehend aus 159 g Wasser, 6,7 g Arylsulfonat (15%ig), 9,8 g Methacrylsäure und 156 g Styrol, zusammen mit 16,8 g einer 2,5%igen Natriumpersulfat-Lösung innerhalb von 90 min bei 82°C zudosiert. Nach Ende beider Zuläufe wurde die Innentemperatur innerhalb von 30 min auf 92°C erhöht und dann Voremulsion 2, bestehend aus 14 g Wasser, 0,5 g Arylsulfonat (15%ig) und 13,6 g $\alpha$-Methylstyrol zugegeben und 5 min gerührt, dann erfolgte die Zugabe von 26 g 10%igen Ammoniak-Wasser; die Reaktionsmischung wurde weitere 15 min bei 92°C gerührt. Im Anschluss daran wurden 3,6 g einer 2,5%igen Natriumpersulfat-Lösung innerhalb von 3 min zudosiert. Voremulsion 3, bestehend aus 157 g Wasser, 5,9 g Arylsulfonat (15%ig), 20,2 g Methylmethacrylat und 198 g Styrol, zusammen mit 23,7 g einer 2,5%igen Natriumpersulfat-Lösung innerhalb von 100 min bei 92°C zudosiert. Abschließend wurde noch 30 min nachpolymerisiert. Zur Reduktion der Restmonomeren wurde abschließend noch eine chemische Desodorierung durchgeführt. Hierzu wurden parallel 12,0 g einer 10%igen tertButylhydroperoxid-Lösung sowie 12,0 g einer 10%igen Ascorbinsäure-Lösung innerhalb von 60 min bei 92°C zur Reaktionsmischung zudosiert.

Feststoffgehalt: 28,9%
pH-Wert: 8,3
Teilchengröße (Autosizer): 571 nm (0,06 PD)
Weißgrad: 78

Dispersion C6:

Die Vorlage, bestehend aus 458 g Wasser und 154,5 g von Dispersion B6, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt und nach Zugabe von 12,8 g einer 2,5%igen Natriumpersulfat-Lösung 5 min anpolymerisiert. Dann wurde Voremulsion 1, bestehend aus 159 g Wasser, 6,7 g Arylsulfonat (15%ig), 9,8 g Methacrylsäure und 156 g Styrol, zusammen mit 16,8 g einer 2,5%igen Natriumpersulfat-Lösung innerhalb von 90 min bei 82°C zudosiert. Nach Ende beider Zuläufe wurde die Innentemperatur innerhalb von 30 min auf 92°C erhöht und dann Voremulsion 2, bestehend aus 14 g Wasser, 0,5 g Arylsulfonat (15%ig) und 13,6 g $\alpha$-Methylstyrol zugegeben und 5 min gerührt, dann erfolgte die Zugabe von 26 g 10%igen Ammoniak-Wasser; die Reaktionsmischung wurde weitere 15 min bei 92°C gerührt. Im Anschluss daran wurden 3,6 g einer 2,5%igen Natriumpersulfat-Lösung innerhalb von 3 min zudosiert. Voremulsion 3, bestehend aus 157 g Wasser, 5,9 g Arylsulfonat (15%ig), 20,2 g Methylmethacrylat und 198 g Styrol, zusammen mit 23,7 g einer 2,5%igen Natriumpersulfat-Lösung innerhalb von 100 min bei 92°C zudosiert. Abschließend wurde noch 30 min nachpolymerisiert. Zur Reduktion der Restmonomeren wurde abschließend noch eine chemische Desodorierung durchgeführt. Hierzu wurden parallel 12,0 g einer 10%igen tertButylhydroperoxid-Lösung sowie 12,0 g einer 10%igen Ascorbinsäure-Lösung innerhalb von 60 min bei 92°C zur Reaktionsmischung zudosiert.

Feststoffgehalt: 29,4%
pH-Wert: 8,8
Teilchengröße (Autosizer): 560 nm (0,11 PD)
Weißgrad: 77

Dispersion C7:

Die Vorlage, bestehend aus 458 g Wasser und 155,3 g von Dispersion B7, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt und nach Zugabe von 12,8 g einer 2,5%igen Natriumpersulfat-Lösung 5 min an polymerisiert. Dann wurde Voremulsion 1, bestehend aus 159 g Wasser, 6,7 g Arylsulfonat (15%ig), 9,8 g Methacrylsäure und 156 g Styrol, zusammen mit 16,8 g einer 2,5%igen Natriumpersulfat-Lösung innerhalb von 90 min bei 82°C zudosiert. Nach Ende beider Zuläufe wurde die Innentemperatur innerhalb von 30 min auf 92°C erhöht und dann Voremulsion 2, bestehend aus 14 g Wasser, 0,5 Arylsulfonat (15%ig) und 13,6 g $\alpha$-Methylstyrol zugegeben und 5 min gerührt, dann erfolgte die Zugabe von 26 g 10%igen Ammoniak-Wasser; die Reaktionsmischung wurde weitere 15 min bei 92°C gerührt. Im Anschluss daran wurden 3,6 g einer 2,5%igen Natriumpersulfat-Lösung innerhalb von 3 min zudosiert. Voremulsion 3, bestehend aus 157 g Wasser, 5,9 g Arylsulfonat (15%ig), 20,2 g Methylmethacrylat und 198 g Styrol, zusammen mit 23,7 g einer 2,5%igen Natriumpersulfat-Lösung innerhalb von 100 min bei 92°C zudosiert. Abschließend wurde noch 30 min nachpolymerisiert. Zur Reduktion der Restmonomeren wurde abschließend noch eine chemische Desodorierung durchgeführt. Hierzu wurden parallel 12,0 g einer 10%igen tertButylhydroperoxid-Lösung sowie 12,0 g einer 10%igen Ascorbinsäure-Lösung innerhalb von 60 min bei 92°C zur Reaktionsmischung zudosiert.

Feststoffgehalt: 29,4%
pH-Wert: 8,8
Teilchengröße (Autosizer): 578 nm (0,08 PD)
Weißgrad: 77

Dispersion C8:

Die Vorlage, bestehend aus 458 g Wasser und 154,5 g von Dispersion B8, wurde in einem Polymerisationsgefäß, welches mit einem Ankerrührer, Rückflusskühler und zwei Zulaufgefäßen ausgestattet war, in einer Stickstoffatmosphäre auf eine Temperatur von 82°C geheizt und nach Zugabe von 12,8 g einer 2,5%igen Natriumpersulfat-Lösung 5 min anpolymerisiert. Dann wurde Voremulsion 1, bestehend aus 159 g Wasser, 6,7 g Arylsulfonat (15%ig), 9,8 g Methacrylsäure und 156 g Styrol, zusammen mit 16,8 g einer 2,5%igen Natriumpersulfat-Lösung innerhalb von 90 min bei 82°C zudosiert. Nach Ende beider Zuläufe wurde die Innentemperatur innerhalb von 30 min auf 92°C erhöht und dann Voremulsion 2, bestehend aus 14 g Wasser, 0,5 g Arylsulfonat (15%ig) und 13,6 g $\alpha$-Methylstyrol zugegeben und 5 min gerührt, dann erfolgte die Zugabe von 26 g 10%igen Ammoniak-Wasser; die Reaktionsmischung wurde weitere 15 min bei 92°C gerührt. Im Anschluss daran wurden 3,6 g einer 2,5%igen Natriumpersulfat-Lösung innerhalb von 3 min zudosiert. Voremulsion 3, bestehend aus 157 g Wasser, 5,9 g Arylsulfonat (15%ig), 20,2 g Methylmethacrylat und 198 g Styrol, zusammen mit 23,7 g einer 2,5%igen Natriumpersulfat-Lösung innerhalb von 100 min bei 92°C zudosiert. Abschließend wurde noch 30 min nachpolymerisiert: Zur Reduktion der Restmonomeren wurde abschließend noch eine chemische Desodorierung durchgeführt. Hierzu wurden parallel 12,0 g einer 10%igen *tert*Butylhydroperoxid-Lösung sowie 12,0 g einer 10%igen Ascorbinsäure-Lösung innerhalb von 60 min bei 92°C zur Reaktionsmischung zudosiert.

Feststoffgehalt: 29,3%
pH-Wert: 8,6
Teilchengröße (Autosizer): 544 nm (0,13 PD)
Weißgrad: 76

**Patentansprüche**

1. Verfahren zur Herstellung von Emulsionspolymerteilchen durch Herstellung eines Mehrstufen Emulsionspolymers durch sequentielle Polymerisation

   i) einer Saat, und
   ii) einer Quellsaat enthaltend 0 bis 100 Gew.-% mindestens eines nicht-ionisch ethylenisch ungesättigten Monomers und 0 bis 40 Gew.-% mindestens eines monoethylneisch ungesättigten hydrophilen Monomers, jeweils bezogen auf das Gesamtgewicht des Kernstufenpolymers, das sowohl Saat als auch Quellsaat umfasst, anschließender Polymerisation
   iii) einer ersten Schale enthaltend 85 bis 99,9 Gew.% mindesten eines nicht-ionisch ethylenisch ungesättigten Monomers und 0,1 bis 15 Gew.-% mindestens eines hydrophilen monoethylenisch ungesättigten Monomers, anschließender Polymerisation

iv) einer zweiten Schale enthaltend 85 bis 99,9 Gew.% mindestens eines nicht-ionisch ethylenisch ungesättigten Monomers und 0,1 bis 15 Gew.-% mindestens eines hydrophilen monethylenisch ungesättigten Monomers, anschließender Zugabe

v) mindestens eines Weichmachermonomers mit einer Ceiling Temperatur kleiner 181 °C bevorzugt kleiner 95°C

vi) Neutralisation bis zu einem pH-Wert von mindestens 7,5 oder größer bevorzugt größer 8, der so gebildeten Partikel mit einer Base, anschließender Polymerisation

vii) einer dritten Schale enthaltend 90 bis 99,9 Gew.% mindestens eines nicht-ionisch ethylenisch ungesättigten Monomers und 0,1 bis 10 Gew.% mindestens eines hydrophilen monoethylenisch ungesättigten Monomers

viii) sowie gegebenenfalls Polymerisation weiterer Schalen enthaltend mindestens ein nicht-ionisch ethylenisch ungesättigtes Monomer und mindestens ein hydrophiles monoethylenisch ungesättigtes Monomer.

2. Verfahren gemäß Anspruch 1, **dadurch gekennzeichnet, dass** das Gewichtsverhältnis der Quellsaat (ii) zu dem Saatpolymer (i) 2:1 bis 50 :1 beträgt.

3. Verfahren gemäß einem der Ansprüche 1 oder 2, **dadurch gekennzeichnet, dass** die mittlere Teilchengröße im ungequollenen Zustand des Kernstufenpolymers, bestehend aus Saat (i) und Quellsaat (ii), 100 bis 400 nm beträgt.

4. Verfahren gemäß einem der Ansprüche 1 bis 3, **dadurch gekennzeichnet, dass** die Glasübergangstemperatur bestimmt nach der Fox-Gleichung des Kernstufenpolymers zwischen -20°C und 150°C liegt.

5. Verfahren gemäß einem der Ansprüche 1 bis 4, **dadurch gekennzeichnet, dass** das Gewichtsverhältnis des Kernstufenpolymers zu der ersten Schale (iii) 20 :1 bis 1 : 1 beträgt.

6. Verfahren gemäß einem der Ansprüche 1 bis 5, **dadurch gekennzeichnet, dass** das Schalenpolymer(iii) eine Glasübergangstemperatur bestimmt nach der Fox-Gleichung zwischen -60°C zu 120°C besitzt.

7. Verfahren gemäß einem der Ansprüche 1 bis 6, **dadurch gekennzeichnet, dass** die Teilchengröße der Stufe (iii) im ungequollenen Zustand 120 nm bis 500 nm beträgt.

8. Verfahren gemäß einem der Ansprüche 1 bis 7, **dadurch gekennzeichnet, dass** das Gewichtsverhältnis der ersten Schale (iii) zu der zweiten Schale (iv) 1 : 30 bis 1 : 1 beträgt.

9. Verfahren gemäß einem der Ansprüche 1 bis 8, **dadurch gekennzeichnet, dass** das Schalenpolymer (iv) eine Glasübergangstemperatur nach Fox von 50 bis 120°C besitzt.

10. Verfahren gemäß einem der Ansprüche 1 bis 9, **dadurch gekennzeichnet, dass** die mittlere Teilchengröße der Stufe (iv) 200 bis 1500 nm beträgt.

11. Verfahren gemäß einem der Ansprüche 1 bis 10, **dadurch gekennzeichnet, dass** das unter (v) aufgeführte Weichmachermonomer ausgewählt ist aus der Gruppe $\alpha$- Methylstyrol, Ester der 2-Phenylacrylsäure / Atropasäure (z.B. Methyl, Ethyl, n-Propyl, n-Butyl), 2-Methyl-2-buten, 2,3-Dimethyl-2-buten, 1,1-Diphenylethen oder Methyl-2-tert-butylacrylat.

12. Verfahren gemäß einem der Ansprüche 1 bis 11, **dadurch gekennzeichnet, dass** die unter (vi) aufgeführte Base ausgewählt ist aus der Gruppe der Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2- Ethoxyethylamin, 3-Ethoxypropylamin, Dimethylethanolamin, Diisopropanolamin, Morpholin, Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin oder Polyvinylamin.

13. Verfahren gemäß einem der Ansprüche 1 bis 12, **dadurch gekennzeichnet, dass** das Gewichtsverhältnis der dritten Schale (viii) zur zweiten Schale (iv) 5 : 1 bis 1 : 2 beträgt.

14. Verfahren gemäß einem der Ansprüche 1 bis 12, **dadurch gekennzeichnet, dass** das Schalenpolymer (vii) eine Glasübergangstemperatur nach Fox von 50 bis 120°C besitzt.

**15.** Verwendung der gemäß einem Verfahren der Ansprüche 1 bis 13 hergestellten Polymerisatteilchen in Anstrichmitteln, Papierbeschichtungen, kosmetischen Mitteln oder Schäumen, in thermoplastischen Formmassen als Schlagzähmodifier.

**16.** Wässriges Emulsionspolymerisat umfassend Wasser und ein Mehrstufen-Emulsionspolymer, welches nach dem Verfahren gemäß Anspruch 1 erhältlich ist.


**Claims**

**1.** A process for preparing emulsion polymer particles by preparing a multistage emulsion polymer by sequentially polymerizing

> i) a seed and
> ii) a swell seed comprising 0 to 100% by weight of at least one nonionically ethylenically unsaturated monomer and 0 to 40% by weight of at least one monoethylenically unsaturated hydrophilic monomer, based in each case on the total weight of the core stage polymer which comprises both seed and swell seed, subsequently polymerizing
> iii) a first shell comprising 85% to 99.9% by weight of at least one nonionically ethylenically unsaturated monomer and 0.1% to 15% by weight of at least one hydrophilic monoethylenically unsaturated monomer, subsequently polymerizing
> iv) a second shell comprising 85% to 99.9% by weight of at least one nonionically ethylenically unsaturated monomer and 0.1% to 15% by weight of at least one hydrophilic monoethylenically unsaturated monomer, subsequently polymerizing
> v) at least one plasticizer monomer having a ceiling temperature of less than 181°C, preferably less than 95°C
> vi) neutralizing to a pH of at least 7.5 or more, preferably more than 8, the resultant particles with a base, subsequently polymerizing
> vii) a third shell comprising 90% to 99.9% by weight of at least one nonionically ethylenically unsaturated monomer and 0.1% to 10% by weight of at least one hydrophilic monoethylenically unsaturated monomer
> viii) and, if appropriate, polymerizing further shells comprising at least one nonionically ethylenically unsaturated monomer and at least one hydrophilic monoethylenically unsaturated monomer.

**2.** The process according to claim 1, wherein the weight ratio of the swell seed (ii) to the seed polymer (i) is 2:1 to 50:1.

**3.** The process according to either of claims 1 and 2, **characterized in that** the average particle size, in the unswollen state, of the core stage polymer composed of seed (i) and swell seed (ii) is 100 to 400 nm.

**4.** The process according to any one of claims 1 to 3, wherein the glass transition temperature, determined by the Fox equation, of the core stage polymer is between -20°C and 150°C.

**5.** The process according to any one of claims 1 to 4, wherein the weight ratio of the core stage polymer to the first shell (iii) is 20:1 to 1:1.

**6.** The process according to any one of claims 1 to 5, wherein the shell polymer (iii) has a glass transition temperature, determined by the Fox equation, of between -60°C to 120°C.

**7.** The process according to any one of claims 1 to 6, wherein the particle size of stage (iii), in the unswollen state, is 120 nm to 500 nm.

**8.** The process according to any one of claims 1 to 7, wherein the weight ratio of the first shell (iii) to the second shell (iv) is 1:30 to 1:1.

**9.** The process according to any one of claims 1 to 8, wherein the shell polymer (iv) possesses a glass transition temperature according to Fox of 50 to 120°C.

**10.** The process according to any one of claims 1 to 9, wherein the average particle size of stage (iv) is 200 to 1500 nm.

**11.** The process according to any one of claims 1 to 10, wherein the plasticizer monomer listed under (v) is selected from the group of $\alpha$-methylstyrene, esters of 2-phenylacrylic acid/atropic acid (e.g., methyl, ethyl, n-propyl, n-butyl), 2-methyl-2-butene, 2,3-dimethyl-2-butene, 1,1-diphenylethene or methyl 2-tert-butylacrylate.

12. The process according to any one of claims 1 to 11, wherein the base listed under (vi) is selected from the group of alkali metal or alkaline earth metal compounds such as sodium hydroxide, potassium hydroxide, calcium hydroxide, magnesium oxide, sodium carbonate; ammonia; primary, secondary, and tertiary amines, such as ethylamine, propylamine, monoisopropylamine, monobutylamine, hexylamine, ethanolamine, dimethylamine, diethylamine, di-n-propylamine, tributylamine, triethanolamine, dimethoxyethylamine, 2- ethoxyethylamine, 3-ethoxypropylamine, dimethylethanolamine, diisopropanolamine, morpholine, ethylenediamine, 2-diethylaminethylamine, 2,3-diaminopropane, 1,2-propylenediamine, dimethylaminopropylamine, neopentanediamine, hexamethylezaediamine, 4,9-dioxadodecane-1,12-diamine, polyethyleneimine or polyvinylamine.

13. The process according to any one of claims 1 to 12, wherein the weight ratio of the third shell (viii) to the second shell (iv) is 5:1 to 1:2.

14. The process according to any one of claims 1 to 12, wherein the shell polymer (vii) possesses a glass transition temperature according to Fox of 50 to 120°C.

15. The use of polymer particles prepared according to a process of any of claims 1 to 13 in paints, paper coatings, cosmetics or foams, in thermoplastic moulding compounds as impact modifiers.

16. An aqueous emulsion polymer comprising water and a multistage emulsion polymer which is obtainable by the process according to claim 1.

## Revendications

1. Procédé de préparation de particules polymères en emulsion par préparation d'un polymère à plusieurs niveaux en emulsion par une polymérisation séquentielle

   i) d'une semence et
   ii) d'une semence de gonflement contenant 0 à 100% en poids d'au moins un monomère éthyléniquement non ioniquement insaturé et 0 à 40% en poids d'au moins un monomère hydrophile éthyléniquement monoinsaturé, à chaque fois par rapport au poids total du polymère à niveaux formant le noyau, qui comprend tant à semence que la semence de gonflement, une polymérisation consécutive
   iii) d'une première coquille contenant 85 à 99,9% en poids d'au moins un monomère éthyléniquement non ioniquement insaturé et 0,1 à 15% en poids d'au moins un monomère hydrophile éthyléniquement monoinsaturé, une polymérisation consécutive
   iv) d'une deuxième coquille contenant 85 à 99,9% en poids d'au moins un monomère éthyléniquement non ioniquement insaturé et 0,1 à 15% en poids d'au moins un monomère hydrophile éthyléniquement monoinsaturé, une addiction consécutive
   v) d'au moins un monomère plastifiant présentant une température de polymérisation critique inférieure à 181°C, de préférence inférieure à 95°C
   vi) une neutralisation jusqu'à un pH d'au moins 7,5 ou plus, de préférence supérieur à 8, des particules ainsi formées avec une base, une polymérisation consécutive
   vii) d'une troisième coquille contenant 90 à 99,9% en poids d'au moins un monomère éthyléniquement non ioniquement insaturé et 0,1 à 10% en poids d'au moins un monomère hydrophile éthyléniquement monoinsaturé,
   viii) ainsi que le cas échéant une polymérisation d'autres coquilles contenant au moins un monomère éthyléniquement non ioniquement insaturé et au moins un monomère hydrophile éthyléniquement monoinsaturé.

2. Procédé selon la revendication 1, **caractérisé en ce que** le rapport pondéral de la semence de gonflement (ii) au polymère de semence (i) est de 2:1 à 50:1.

3. Procédé selon l'une quelconque des revendications 1 ou 2, **caractérisé en ce que** la grosseur moyenne des particules à l'état non gonflé du polymère à niveaux formant le noyau, constitué par la semence (i) et la semence de gonflement (ii) est de 100 à 400 nm.

4. Procédé selon l'une quelconque des revendications 1 à 3, **caractérisé en ce que** la température de transition vitreuse déterminée selon l'équation de Fox du polymère à niveaux formant le noyau est comprise entre -20°C et 150°C.

5. Procédé selon l'une quelconque des revendications 1 à 4, **caractérisé en ce que** le rapport pondéral du polymère à niveaux formant le noyau à la première coquille (iii) est de 20:1 à 1:1.

6. Procédé selon l'une quelconque des revendications 1 à 5, **caractérisé en ce que** le polymère de coquille (iii) présente une température de transition vitreuse déterminée selon l'équation de Fox entre -60°C et 120°C.

7. Procédé selon l'une quelconque des revendications 1 à 6, **caractérisé en ce que** la grosseur des particules de l'étape (iii) à l'état non gonflé est de 120 nm à 500 nm.

8. Procédé selon l'une quelconque des revendications 1 à 7, **caractérisé en ce que** le rapport pondéral de la première coquille (iii) à la deuxième coquille (iv) est de 1:30 à 1:1.

9. Procédé selon l'une quelconque des revendications 1 à 8, **caractérisé en ce que** le polymère de coquille (iv) présente une température de transition vitreuse selon Fox de 50 à 120°C.

10. Procédé selon l'une quelconque des revendications 1 à 9, **caractérisé en ce que** la grosseur moyenne des particules de l'étape (iv) est de 200 nm à 1500 nm.

11. Procédé selon l'une quelconque des revendications 1 à 10, **caractérisé en ce que** le monomère plastifiant indiqué sous (v) est choisi dans le groupe formé par l'α-méthylstyrène, les esters de l'acide 2-phénylacrylique/acide atropique (par exemple de méthyle, d'éthyle, de n-propyle, de n-butyle), le 2-méthyl-2-butène, le 2,3-diméthyl-2-butène, le 1,1-diphényléthylène ou l'acrylate de méthyl-2-tert-butyle.

12. Procédé selon l'une quelconque des revendications 1 à 11, **caractérisé en ce que** la base indiquée sous (vi) est choisie dans le groupe formé par les composés de métal alcalin ou alcalino-terreux, tels que l'hydroxyde de sodium, l'hydroxyde de potassium, l'hydroxyde de calcium, l'oxyde de magnésium, le carbonate de sodium ; l'ammoniaque ; les amines primaires, secondaires et tertiaires, telles que l'éthylamine, la propylamine, la mono-isopropylamine, la monobutylamine, l'hexylamine, l'éthanolamine, la diméthylamine, la diéthylamine, la di-n-propylamine, la tributylamine, la triéthanolamine, la diméthoxyéthylamine, la 2-éthoxyéthylamine, la 3-éthoxypropylamine, la diméthyléthanolamine, la diisopropanolamine, la morpholine, l'éthylènediamine, la 2-diéthylaminoéthylamine, le 2,3-diaminopropane, la 1,2-propylènediamine, la diméthylaminopropylamine, la néopentanediamine, l'hexaméthylènediamine, la 4,9-dioxadodécane-1,12-diamine, la polyéthylénimine ou la polyvinylamine.

13. Procédé selon l'une quelconque des revendications 1 à 12, **caractérisé en ce que** le rapport pondéral de la troisième coquille (viii) à la deuxième coquille (iv) est de 5:1 à 1:2.

14. Procédé selon l'une quelconque des revendications 1 à 12, **caractérisé en ce que** le polymère de coquille (vii) présente une température de transition vitreuse selon Fox de 50 à 120°C.

15. Utilisation des particules polymères préparées selon un procédé des revendications 1 à 13 dans les enduits, les revêtements de papier, les agents cosmétiques ou les mousses, dans les masses de moulage thermoplastiques comme agent de modification de la résilience.

16. Polymère en émulsion aqueuse comprenant de l'eau et un polymère à plusieurs niveaux en émulsion, qui peut être obtenu selon le procédé selon la revendication 1.

**EP 1 904 544 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 22633 A
- EP 915108 A
- EP 959176 A
- EP 404184 A
- US 5360827 A
- WO 0068304 A
- DE 2501123

### In der Beschreibung aufgeführte Nicht-Patentliteratur

- **C. J. MCDONALD ; M. J. DEVON.** *Advances in Colloid and Interface Science,* 2002, vol. 99, 181-213
- Fox-Gleichung. John Wiley & Sons Ltd, 1997
- Berechnung per Fox-Gleichung. John Wiley & Sons Ltd, 1997